# EUROPÄISCHE PATENTSCHRIFT

(11) **EP 2 908 008 B1**
(45) Veröffentlichungstag und Bekanntmachung des Hinweises auf die Patenterteilung: **10.10.2018**
(21) Anmeldenummer: 14155357.8
(22) Anmeldetag: 17.02.2014
(51) Int. Cl.: F03D 13/20

(54) **Windenergieanlage mit einem Turm**
Wind energy plant with a tower
Éolienne dotée d'un mât

(43) Veröffentlichungstag der Anmeldung: 19.08.2015
(73) Patentinhaber: Nordex Energy GmbH, 22419 Hamburg (DE)
(72) Erfinder: Kruse, Niels, 22299 Hamburg (DE); Gutzeit, Florian, 22081 Hamburg (DE)
(74) Vertreter: Hauck Patentanwaltspartnerschaft mbB

(56) Entgegenhaltungen:
- EP-A1- 2 672 012
- DE-A1- 3 007 442
- JP-A- 2010 150 985
- US-A1- 2011 150 631

## Beschreibung

Die vorliegende Erfindung betrifft eine Windenergieanlage mit einem Turm.

Neben zahlreichen Belastungen, die für den Turm einer Windenergieanlage im Hinblick auf die Tragfähigkeit und Gebrauchstauglichkeit zu berücksichtigen sind, sind insbesondere bei sehr hohen Türmen Schwingungen ein wichtiger Aspekt. Schwingungen werden im Betrieb einer Windenergieanlage angeregt, wenn die Drehzahl des Rotors oder deren ganzzahliges Vielfaches einer Eigenfrequenz des Turmes entspricht. Bei modernen Windenergieanlagen, die einen Rotor mit drei Rotorblättern aufweisen, sind insbesondere das Dreifache und das Sechsfache der Rotordrehzahl, fachsprachlich auch 3p- bzw. 6p-Anregung genannt, von besonderer Bedeutung.

Bei jeder Umdrehung des Rotors durchläuft jedes Rotorblatt einmal die unterste senkrechte Stellung und passiert vor dem Turm und es kommt zu einer aerodynamischen Wechselwirkung mit der vor dem Turm gestauten Luft; hierdurch entsteht ein Nickmoment mit einer Frequenz, die bei drei Rotorblättern dem Dreifachen der Rotordrehzahl (3p) entspricht. Außerdem durchläuft jedes Rotorblatt bei jeder Umdrehung einmal die oberste senkrechte Stellung; hierdurch entsteht ebenfalls ein Nickmoment. Durch die Kombination beider ergibt sich die Anregung mit dem Sechsfachen der Rotordrehzahl (6p).

Von besonderer Bedeutung sind die erste und die zweite Eigenfrequenz der Windenergieanlage.

Eine Eigenfrequenz eines schwingfähigen Systems ist eine Frequenz, mit der das System nach einmaliger Anregung als Eigenform schwingen kann. Wenn einem solchen System von außen Schwingungen aufgezwungen werden, deren Frequenz mit der Eigenfrequenz übereinstimmt, reagiert das System bei schwacher Dämpfung mit besonders großen Amplituden, was man als Resonanz bezeichnet.

Die erste Eigenfrequenz liegt bei hohen Türmen normalerweise deutlich unter 0,5 Hertz; entsprechende Drehzahlen treten im Betrieb der Windenergieanlage lediglich kurz und vorübergehend auf, so dass keine dauerhafte Anregung auftritt.

Die zweite Eigenfrequenz kann gerade bei hohen Türmen in einem Bereich liegen, in dem aufgrund einer im Betrieb regelmäßig auftretenden Rotordrehzahl (bzw. deren ganzzahligem Vielfachen, z. B. 3p, 6p) eine starke und dauerhafte Anregung auftritt.

Bei niedrigeren Türmen liegt die zweite Eigenfrequenz meist deutlich oberhalb eines Bereiches, in dem starke Anregungen aufgrund einer Betriebsdrehzahl auftreten.

Aus der DE 296 12 720 U1 ist eine Windenergieanlage bekannt, deren Turm in seinem oberen Bereich sich wieder aufweitend ausgebildet ist.

Aus der US 6,467,233 B1 ist ein Turm bekannt, der einen unteren Bereich mit einem größeren Durchmesser und einen oberen Bereich mit einem geringeren Durchmesser aufweist.

Aus der US 7,997,876 B2 ist eine Windenergieanlage bekannt, deren Turm im Bereich der Blattspitze einen verringerten Durchmesser aufweist, um eine Berührung des Rotorblattes mit dem Turm zu vermeiden.

Aus der WO 99/63219 A1 ist eine Windenergieanlage bekannt, deren Turm in seinem oberen Bereich mit einer aktiven Dämpfungseinrichtung versehen ist. Weitere Dämpfungseinrichtungen sind vorgesehen, um Schwingungen der Rotorblätter zu verhindern.

Aus der WO 01/71184 A1 ist ein Turm für eine Windenergieanlage bekannt, der einen sich nach oben hin verjüngenden Turmabschnitt mit bauchiger, im Längsschnitt konvexer Außenwand besitzt.

Aus der WO 2008/000265 A1 ist eine Windenergieanlage bekannt, deren Turm Laständerungsmittel aufweist, um die Turmeigenfrequenz aktiv zu optimieren.

EP 2 672 012 A2 beschreibt eine Verbindungsstruktur zur Verbindung eines Gründungspfahls einer Offshore-Windenergieanlage mit ihrem Turm. Die Verbindungsstruktur besitzt einen größeren Durchmesser als der Gründungspfahl, wobei der auf der Verbindungsstruktur sitzende Mast der Windenergieanlage sich konisch verjüngt.

Aus DE 30 07 442 A1 ist eine Vorrichtung zum Verankern von freitragenden hohen Strukturen bekannt, bei der die Struktur in einem Fundament mit einer gelenkigen Lagerung abgestützt oder oberhalb von dieser elastisch eingespannt ist.

Der Erfindung liegt die Aufgabe zugrunde, eine Windenergieanlage mit einem Turm bereitzustellen, bei dem eine unzulässig hohe Beanspruchung der Konstruktion durch eine Anregung in der zweiten Eigenfrequenz vermieden wird.

Erfindungsgemäß wird die Aufgabe durch eine Windenergieanlage mit den Merkmalen aus Anspruch 1 gelöst. Vorteilhafte Ausgestaltungen bilden die Gegenstände der Unteransprüche.

Die Windenergieanlage gemäß der Erfindung weist einen Turm auf, der im Bereich eines Schwingungsbauches bei Schwingungen in der zweiten Eigenfrequenz, einen Abschnitt besitzt, in dem der Radius gegenüber den darüber und darunter liegenden Abschnitten vergrößert ist. Der Schwingungsbauch ist der Bereich der stärksten Krümmung der zweiten Eigenform. Dadurch wird die zweite Eigenfrequenz so weit verändert, dass im normalen Betrieb der Windenergieanlage regelmäßig auftretende Drehzahlen keine dauerhafte Anregung der zweiten Eigenfrequenz mehr verursachen können. Besonders vorteilhaft ist, dass mit dem abschnittsweisen Vergrößern des Radius die erste Eigenfrequenz des Turmes nicht oder nur wenig verändert wird.

Der Erfindung liegt die Erkenntnis zugrunde, dass die Eigenfrequenzen des Turmes von der Länge, der Masse und dem Radius abhängig sind. Durch eine Veränderung des Radius' im Bereich des Schwingungsbauches bei der Schwingung mit der zweiten Eigenfrequenz aber kann diese gezielt verändert werden.

Die Erfindung ermöglicht es, die zweite Eigenfrequenz des Turmes zu beeinflussen. Dabei wird die Masse nur geringfügig erhöht; insbesondere ist es nicht notwendig, die Wandstärke zu vergrößern. Außerdem wird die erste Eigenfrequenz nur sehr wenig beeinflusst.

In einer bevorzugten Ausgestaltung weist der Abschnitt mit dem vergrößerten Radius eine Länge auf, die mindestens dem Vierfachen, besonders bevorzugt dem Zehnfachen des Radius' entspricht.

In einer weiteren bevorzugten Ausgestaltung ist ein konischer Übergang zwischen dem Abschnitt mit vergrößertem Radius und den darüber bzw. darunter liegenden Abschnitten des Turmes vorgesehen.

In einer bevorzugten Ausgestaltung weist zumindest der Abschnitt mit dem vergrößerten Radius einen kreiszylindrischen Bereich mit konstantem Radius auf. Die miteinander zu vergleichenden Radien der Abschnitte beziehen sich dann auf den kreiszylindrischen Bereich mit dem konstanten Radius.

In einer bevorzugten Ausgestaltung wird der zweite Radius mindestens so groß gewählt, dass die zweite Eigenfrequenz der Windenergieanlage oberhalb der bei der Nenndrehzahl auftretenden Anregungsfrequenz liegt, also der Drehzahl, bei der die Windenergieanlage ihre Nennleistung erreicht. Eine Erkenntnis der Erfindung besteht darin, dass bei einer Vergrößerung des Radius' im zweiten Abschnitt auch die zweite Eigenfrequenz erhöht wird. Sie kann somit in einen Bereich geschoben werden, in dem sie nicht mehr im Bereich der bei normalen Betriebsdrehzahlen auftretenden Anregungsfrequenzen liegt.

Zweckmäßigerweise wird bei den Eigenfrequenzen bzw. Schwingungen stets auf ein Gesamtsystem einer Windenergieanlage mit einem Turm abgestellt, der auf einem Fundament steht und ein mit Generator und Rotor bestücktes Maschinenhaus trägt. Nur bei einem Gesamtsystem einer Windenergieanlage liegen auch die Werte für die Eigenfrequenzen und die Anregungen vor, wie sie im Betrieb der Windenergieanlage tatsächlich auftreten. Ein freistehender Turm, der beispielsweise nicht mit einem Fundament verbunden ist oder der kein Maschinenhaus trägt, kann ein anderes Schwingungsverhalten besitzen.

Die Erfindung wird nachfolgend anhand von Figuren im Detail beschrieben. Es zeigen:
- Fig. 1: eine Turmbiegeform (Eigenform) bei einer Anregung mit der ersten Eigenfrequenz,
- Fig. 2: eine Turmbiegeform (Eigenform) bei einer Anregung mit der zweiten Eigenfrequenz,
- Fig. 3: ein Campbell-Diagramm,
- Fig. 4: eine Auslegung eines Turmes nach dem Stand der Technik und nach der Erfindung und
- Fig. 5: eine Windenergieanlage mit einem Turm nach der Erfindung.

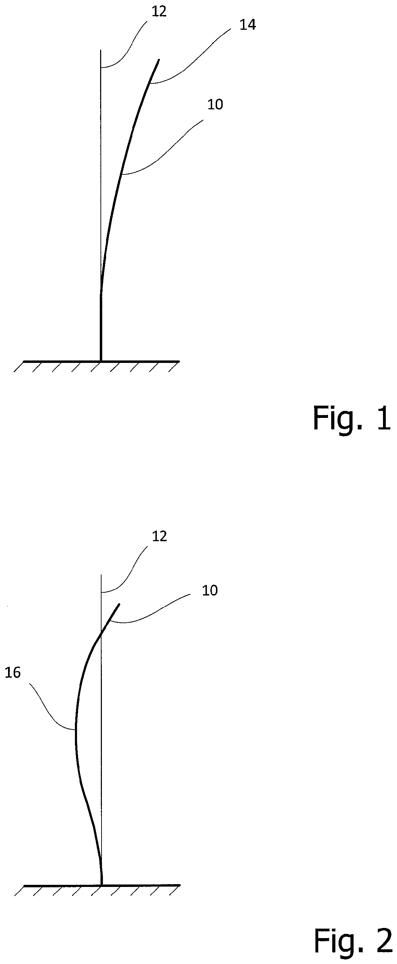

Fig. 1 zeigt schematisch die Turmbiegeform (Eigenform) bei einer Anregung mit der ersten Eigenfrequenz. Wie in Fig. 1 zu erkennen, ist der Turm 10 deutlich aus der Vertikalen 12 ausgelenkt, wobei mit zunehmender Höhe die Auslenkung 14 zunimmt.

Fig. 2 zeigt in einer schematischen Darstellung eine zweite Turmbiegeform (Eigenform), die bei einer Anregung mit der zweiten Eigenfrequenz auftritt. Wie in Fig. 2 zu erkennen, tritt an dem Turm 10 ungefähr auf halber Höhe ein Schwingungsbauch 16 auf, in dessen Bereich die Auslenkung am größten ist.

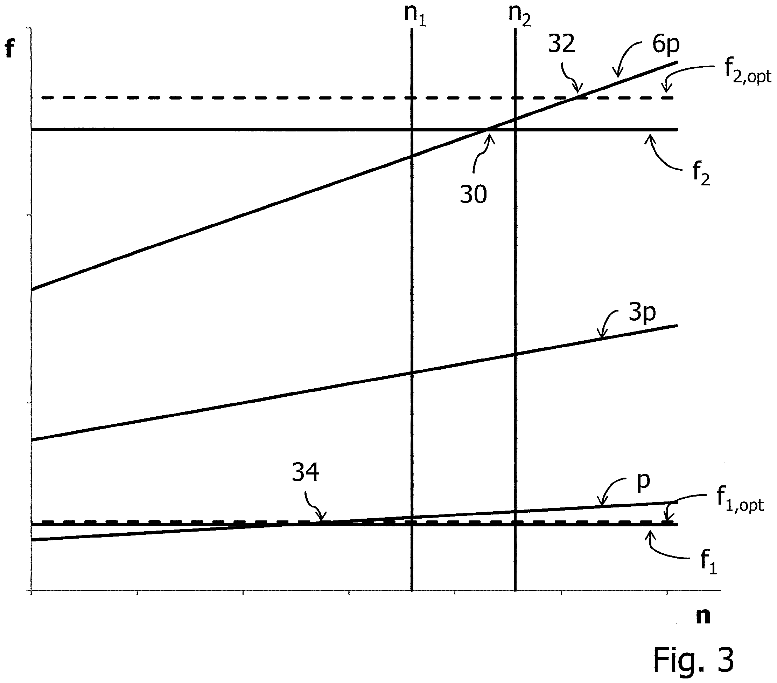

Fig. 3 zeigt in einem Campbell-Diagramm die Zusammenhänge zwischen den Eigenfrequenzen des Turmes und den im Betrieb einer Windenergieanlage auftretenden Rotordrehzahlen bzw. deren ganzzahligen Vielfachen. Die Abszisse zeigt die Rotordrehzahl n, die Ordinate zeigt Frequenzen f.

Die horizontalen Linien zeigen: f₁ die erste Eigenfrequenz eines Turmes nach dem Stand der Technik; f_{1,opt} die erste Eigenfrequenz eines erfindungsgemäßen Turmes; f₂ die zweite Eigenfrequenz eines Turmes nach dem Stand der Technik; f_{2,opt} die zweite Eigenfrequenz eines erfindungsgemäßen Turmes.

Die vertikalen Linien zeigen: n₁ eine erste im Betrieb der Windenergieanlage auftretende Rotordrehzahl; n₂ eine zweite im Betrieb der Windenergieanlage auftretende Rotordrehzahl, insbesondere die Nenndrehzahl, bei der die Windenergieanlage ihre Nennleistung gerade erreicht; in dem Bereich zwischen n₁ und n₂ arbeitet die Windenergieanlage im Teillastbereich, wobei während langer Zeiträume kaum größere Drehzahländerungen auftreten.

Die schrägen Linien zeigen: p die Anregung mit der Rotordrehzahl, 3p die Anregung mit dem Dreifachen der Rotordrehzahl, 6p die Anregung mit dem Sechsfachen der Rotordrehzahl. Für jede auf der Abszisse abgetragene Rotordrehzahl kann mittels der Linien p, 3p, 6p auf der Ordinate die entsprechende Frequenz abgelesen werden.

In jedem Kreuzungspunkt 30, 32, 34 einer der Linien p, 3p, 6p mit einer der Linien f₁, f_{1,opt}, f₂, f_{2,opt} kommt es zu einer Anregung in einer Eigenfrequenz, so dass die Windenergieanlage in Resonanz geraten kann, wenn die Anregung lange genug anhält. Die Kreuzung 30 zwischen der Linie 6p und der Linie f₂ liegt in dem Bereich von Drehzahlen (n₁, n₂), in dem die Windenergieanlage sehr oft und lange arbeitet; dadurch kann es bei einem Turm nach dem Stand der Technik zu lang andauernden starken Schwingungen in der zweiten Eigenfrequenz kommen, was zu einer starken Verkürzung der Lebensdauer des Turmes führen würde.

Bei dem erfindungsgemäßen Turm ist die zweite Eigenfrequenz f_{2,opt} höher und der Kreuzungspunkt 32 mit der Linie 6p ist aus dem Bereich (n₁, n₂) heraus nach rechts, hin zu einer höheren Drehzahl, verschoben; dadurch kommt es nicht mehr zu einer häufigen und lang andauernden Anregung.

Der Unterschied zwischen der ersten Eigenfrequenz f₁ des Turmes nach dem Stand der Technik und der ersten Eigenfrequenz f_{1,opt} des erfindungsgemäßen Turmes ist sehr klein, der Kreuzungspunkt 34 zwischen der Linie p und der Linie f_{1,opt} ist also gegenüber dem mit der Linie f₁ kaum verschoben und bleibt links außerhalb des Bereiches (n₁, n₂) bei einer niedrigeren Rotordrehzahl, wodurch es auch hier nicht zu einer häufigen und lang andauernden Anregung kommt.

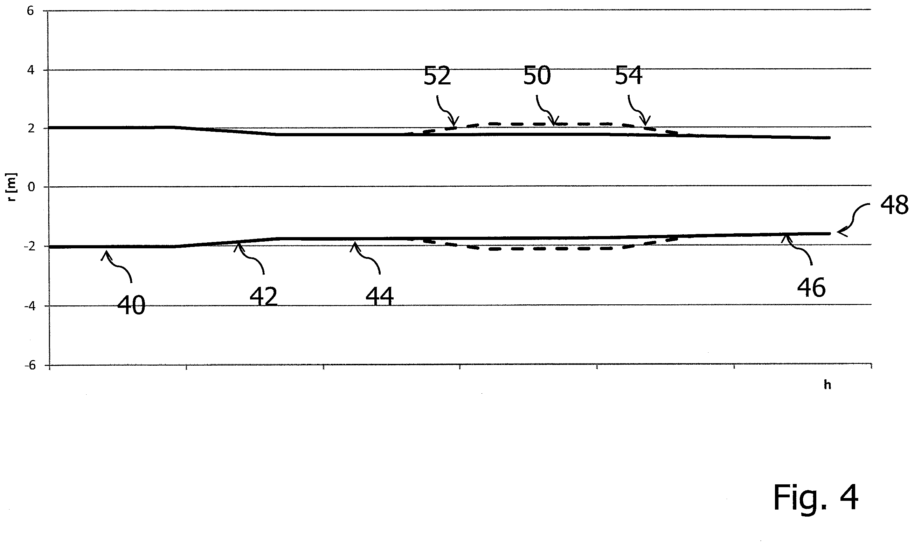

Fig. 4 zeigt in einem Diagramm die Auslegung eines Turms nach der Erfindung. Die Abszisse zeigt die Höhe über dem Grund, die Ordinate zeigt den jeweils zu der Höhe gehörenden Radius des Turmes. Am linken Rand die Höhe 0 entspricht der Oberkante des Fundaments, auf dem der Turm sich befindet.

In einem unteren Abschnitt 40 bis zu einer bestimmten Höhe ist der Turm zylindrisch mit einem Radius von 2 m und geht darüber in einem Konus 42 auf einen kleineren Radius 44 über. Ein Turm nach dem Stand der Technik verläuft mit weiter zunehmender Höhe beispielsweise zylindrisch und weist in seinem oberen Bereich (im Diagramm rechts) einen konischen Abschnitt 46 auf, so dass der Durchmesser am Turmkopf 48 dem Durchmesser einer Drehverbindung entspricht, auf der das Maschinenhaus der Windenergieanlage drehbar gelagert ist.

Im Bereich des Schwingungsbauches der zweiten Eigenform ist erfindungsgemäß ein Abschnitt 50 mit einem vergrößerten Durchmesser vorgesehen, im Diagramm gestrichelt dargestellt. Der Abschnitt 50 mit dem vergrößerten Durchmesser weist bevorzugt unterhalb und oberhalb jeweils einen konischen Übergang 52, 54 auf.

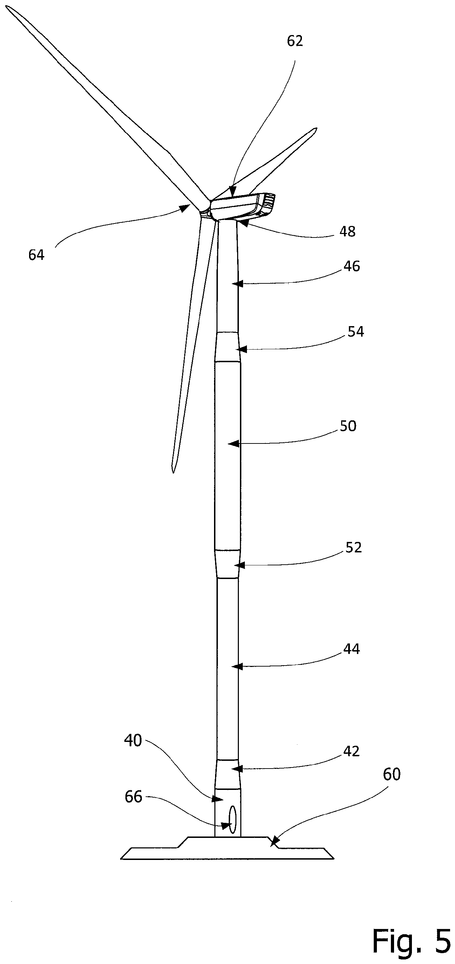

Fig. 5 zeigt eine Windenergieanlage mit einem Turm nach der Erfindung. Der Turm steht auf einem Fundament 60 und weist im Bereich des Schwingungsbauches der zweiten Eigenform einen Abschnitt 50 mit einem größeren Durchmesser als der darunter liegende Abschnitt 44 und der darüber liegende Abschnitt 46 auf. Zwischen den Abschnitten 44 und 50 bzw. 50 und 46 befindet sich jeweils ein konischer Übergang 52, 54. Auf dem Turmkopf 48 trägt der Turm ein Maschinenhaus 62, in dem sich ein Generator befindet und an dem ein Rotor 64 mit drei Rotorblättern drehbar montiert ist. Der Rotor 64 ist mittelbar oder unmittelbar mit dem Generator in dem Maschinenhaus 62 verbunden, so dass Energie des Windes durch den Rotor in Rotation und mittels des Generators in elektrische Energie umgewandelt werden kann. Eine Tür 66 im unteren Abschnitt 40 des Turmes gewährt Zugang zum Inneren der Windenergieanlage.

Der Turm nach der Erfindung kann aus Stahl oder aus Beton oder aus anderen Materialien oder deren Kombination bestehen. Insbesondere kann er als Stahlrohrturm oder als Betonrohrturm oder als Hybridturm mit einem Betonabschnitt und einem Stahlrohrabschnitt ausgebildet sein.

## Patentansprüche

1. Windenergieanlage mit einem Turm, der einen ersten, einen zweiten und einen dritten Abschnitt (44, 50, 46) aufweist, welche aneinander grenzend übereinander angeordnet sind, wobei dem ersten Abschnitt (44) ein erster Radius, dem zweiten Abschnitt (50) ein zweiter Radius und dem dritten Abschnitt (46) ein dritter Radius zugeordnet ist, **dadurch gekennzeichnet, dass** der zweite Radius größer als der erste und dritte Radius ist und dass der zweite Abschnitt (50) sich im Bereich eines Schwingungsbauches (16) einer Schwingung des Turmes mit einer zweiten Eigenfrequenz befindet.

2. Windenergieanlage mit einem Turm nach Anspruch 1, **dadurch gekennzeichnet, dass** der zweite Abschnitt (50) eine Länge aufweist, die mindestens dem Vierfachen, bevorzugt dem Zehnfachen des zweiten Radius' entspricht.

3. Windenergieanlage mit einem Turm nach einem der vorhergehenden Ansprüche, **dadurch gekennzeichnet, dass** der zweite Abschnitt (50) einen kreiszylindrischen Bereich mit konstantem Radius aufweist.

4. Windenergieanlage mit einem Turm nach einem der vorhergehenden Ansprüche, **dadurch gekennzeichnet, dass** jeder Abschnitt (44, 50, 46) einen kreiszylindrischen Bereich mit konstantem Radius aufweist.

5. Windenergieanlage mit einem Turm nach einem der vorhergehenden Ansprüche, **dadurch gekennzeichnet, dass** zwischen dem ersten und dem zweiten Abschnitt und/oder zwischen dem zweiten und dem dritten Abschnitt jeweils ein konischer Übergangsbereich (52, 54) vorgesehen ist.

6. Windenergieanlage mit einem Turm nach einem der vorhergehenden Ansprüche, **dadurch gekennzeichnet, dass** der zweite Radius mindestens so groß gewählt wird, dass die zweite Eigenfrequenz sich oberhalb der bei einer Nenndrehzahl der Windenergieanlage auftretenden Anregungsfrequenz befindet.

7. Windenergieanlage mit einem Turm nach einem der vorhergehenden Ansprüche, **dadurch gekennzeichnet, dass** der Turm auf einem Fundament (60) steht und ein mit Generator und Rotor (64) bestücktes Maschinenhaus (62) trägt.

## Claims

1. A wind turbine with a tower that has a first, a second and a third section (44, 50, 46) that are arranged adjacent to and on top of each other, wherein the first section (44) is associated with a first radius, the second section (50) is associated with a second radius, and the third section (46) is associated with a third radius, **characterized in that** the second radius is larger than the first and third radius and that the second section (50) is located in the region of an antinode (16) of an oscillation of the tower at a second natural frequency.

2. The wind turbine with a tower according to claim 1, **characterized in that** the second section (50) has a length that corresponds to at least four times, preferably ten times, the second radius.

3. The wind turbine with a tower according to one of the preceding claims, **characterized in that** the second section (50) has a circular-cylindrical region with a constant radius.

4. The wind turbine with a tower according to one of the preceding claims, **characterized in that** each section (44, 50, 46) has a circular-cylindrical region with a constant radius.

5. The wind turbine with a tower according to one of the preceding claims, **characterized in that** a conical transition region (52, 54) is provided between the first and the second section and/or between the second and the third section, respectively.

6. The wind turbine with a tower according to one of the preceding claims, **characterized in that** the second radius is selected at least so large that the second natural frequency is above the excitation frequency occurring at a rated rotational speed of the wind turbine.

7. The wind turbine with a tower according to one of the preceding claims, **characterized in that** the tower stands on a foundation (60) and carries a nacelle (62) equipped with a generator and rotor (64).

## Revendications

1. Éolienne dotée d'un mât, qui présente un premier, un deuxième et un troisième tronçon (44, 50, 46), lesquels sont disposés l'un au-dessus de l'autre de façon contiguë, dans laquelle un premier rayon est attribué au premier tronçon (44), un deuxième rayon au deuxième tronçon (50) et un troisième rayon au troisième tronçon (46), **caractérisée en ce que** le deuxième rayon est plus grand que le premier et le troisième rayon et que le deuxième tronçon (50) se trouve dans la zone d'un ventre d'oscillation (16) d'une oscillation du mât ayant une seconde fréquence propre.

2. Éolienne dotée d'un mât selon la revendication 1, **caractérisée en ce que** le deuxième tronçon (50) présente une longueur qui équivaut au moins au quadruple, de préférence au décuple du deuxième rayon.

3. Éolienne dotée d'un mât selon l'une des revendications précédentes, **caractérisée en ce que** le deuxième tronçon (50) présente une zone cylindrique circulaire ayant un rayon constant.

4. Éolienne dotée d'un mât selon l'une des revendications précédentes, **caractérisée en ce que** chaque tronçon (44, 50, 46) présente une zone cylindrique circulaire ayant un rayon constant.

5. Éolienne dotée d'un mât selon l'une des revendications précédentes, **caractérisée en ce qu'**une zone de transition conique (52, 54) est respectivement prévue entre le premier et le deuxième tronçon et/ou entre le deuxième et le troisième tronçon.

6. Éolienne dotée d'un mât selon l'une des revendications précédentes, **caractérisée en ce que** le deuxième rayon est choisi au moins suffisamment grand pour que la seconde fréquence propre se trouve au-dessus de la fréquence d'excitation apparaissant à une vitesse de rotation nominale de l'éolienne.

7. Éolienne dotée d'un mât selon l'une des revendications précédentes, **caractérisée en ce que** le mât repose sur une fondation (60) et qu'il supporte une nacelle (62) équipée d'un générateur et d'un rotor (64).
